# EUROPEAN PATENT APPLICATION

(11) **EP 1 863 255 A1**
(43) Date of publication of application: **05.12.2007**
(21) Application number: 06722114.3
(22) Date of filing: 22.03.2006
(51) Int. Cl.: H04L 29/06

(54) **AN IMPLEMENTING METHOD FOR TRAVERSING THE FIREWALL BY THE MOBILE IPV6 MASSAGE AND THE FIREWALL**

(30) Priority: 22.03.2005 CN 200510055654
(71) Applicant: Huawei Technologies Co., Ltd., Longgang District, Shenzhen Guangdong 518129 (CN)
(72) Inventor: MIAO, Fuyou, Shenzhen, Guangdong 518129 (CN); ZHANG, Hongke, Shenzhen, Guangdong 518129 (CN); ZHANG, Sidong, Shenzhen, Guangdong 518129 (CN); YANG, Shen, Shenzhen, Guangdong 518129 (CN); SU, Wei, Shenzhen, Guangdong 518129 (CN); REN, Yan, Shenzhen, Guangdong 518129 (CN); ZHENG, Zuzhou, Shenzhen, Guangdong 518129 (CN); QIN, Yajuan, Shenzhen, Guangdong 518129 (CN); GAO, Shuai, Shenzhen, Guangdong 518129 (CN); WANG, Jianglin, Shenzhen, Guangdong 518129 (CN); LIU, Ying, Shenzhen, Guangdong 518129 (CN)
(74) Representative: Beresford, Keith Denis Lewis
(86) International application number: PCT/CN2006/000462
(87) International publication number: WO 2006/099803

(57) **Abstract**

A method for a MIPv6 packet traversing a firewall includes: acquiring filtering information containing the home address of a Mobile Node (MN) from an MIPv6 packet initiating communication; establishing a filtering rule according to the filtering information; and filtering a sequent MIPv6 packet according to the filtering rule. A firewall according to the above method is also provided. According to the present invention, it may be guaranteed that a MIPv6 pack may reliably traverse a firewall in various cases. Moreover, in the case that an MN and a CN do not know whether there is a firewall between them and do not know the location of the firewall, the normal communication may still ensure not to be interrupted when the address of the MN changes.

## Description

### Field of the Invention

The present invention relates to mobile Internet Protocol version 6 (IPv6) technologies in network communication, and particularly, to a method for a mobile IPv6 packet traversing a firewall, and a firewall.

### Background of the Invention

In the 21^{st} Century, Internet not only provides existing data services and multimedia audio and video services, but also provides a radio Internet access service for mobile users to implement the function of a mobile Internet. Mobile IPv6 (MIPv6) implements the mobility of a node in an IPv6 network and enables the node to still remain reachable when the node moves in the IPv6 network.

In a mobile IP network, the home address of a Mobile Node (MN) may be set no matter whether the MN is connected to the home link. The home address is an IP address designated to the MN within the home subnet prefix.

A packet sent to the home address is routed to the home link and then is routed to the home address through a traditional routing mechanism when the MN is in the home network.

The care-of address of the MN may be set when the MN is connected to a foreign link. The care-of address is an IP address associated with the prefix of a specific foreign link of the MN. The MN may acquire the care-of address by using the Stateful Address Autoconfiguration protocol or Stateless Address Autoconfiguration protocol. A data packet to the care-of address may be routed to the node as long as the node is still in this location. The MN may receive a data packet from multiple care-of addresses. For example, the former link remains reachable when the MN moves. In a mobile IPv6 network, the relation between the home address and the care-of address is called "binding".

A node communicating with the MN is called a Correspondent Node (CN) and there are two communication modes between the MN and the CN, i.e. a bi-directional tunnel mode and a route optimization mode.

In the bi-directional tunnel mode, the CN is unnecessary to support mobile IPv6, and a home agent intercepts a data packet to the home address of the MN by using a Proxy Neighbor Discovery protocol in the home link. The intercepted data packet is sent to the current care-of address of the MN through a tunnel in which IPv6 encapsulation is adopted.

In the route optimization mode, the MN needs to bind the current care-of address to the CN. In other words, the MN notifies the home agent and the CN of a new care-of address when the location of the MN changes every time. Thus, a data packet sent from the CN may be directly routed to the care-of address of the MN. The CN routes the data packet to the care-of address designated by a binding item according to the buffered binding item when sending the data packet to any IPv6 address.

When the CN sends a data packet to the MN, the destination address is set as the care-of address of the MN, and a new type of routing header containing the requested home address is added into the IPv6 extension header. When the MN sends a data packet to the CN, the source address of the data packet is set as the current care-of address of the MN and a new destination header containing the requested home address is added into the IPv6 extension header.

As can be seen from the above description, the normal communication in mobile IPv6 may be implemented. However, a firewall, as an important network protection device, is widely configured at various parts of a communication network. The operating characteristics of the firewall make a data packet unable to be routed to the destination successfully.

The firewall is divided into two types, i.e., a packet filtering type and an application proxy type.

### (1) The packet filtering type

The packet filtering type of firewall determines, according to the source address, the destination address, the port number and the protocol type in the header of a data packet, whether the data packet is allowed to traverse. Only those data packets meeting filtering conditions are forwarded to their respective destinations while other data packets are dropped.

For example, when a node in a network protected by a firewall communicates with an external node, the node first sends a Transmission Control Protocol synchronization (TCP SYN) packet to establish a TCP connection. When the TCP SYN packet passes the firewall, the firewall creates a corresponding item in a state list of the firewall according to the contents of the TCP SYN packet, and the item includes the source address, the destination address, the source port number and the destination port number of the TCP connection. Then, the firewall may monitor data packets according to the item.

### (2) The Application Proxy type

The Application proxy type of firewall may completely "obstruct" a network communication flow and monitor and control the communication flow in the application layer by programming a dedicated proxy program for each application service. After the processing of the firewall, a data packet sent from the inside of the network protected by the firewall seems to be from an external network card of the firewall. Thus, the internal structure of the network may be shielded. The application proxy type of firewall is recognized as the most secure firewall by network security specialists and the media.

There are some difficulties in implementing MIPv6 in a network with firewalls because the existing firewalls are all designed according to the communication features of the fixed networks. For example, if the CN is in a network protected by a firewall during a communication process and the location of the MN changes in a foreign network, the MN performs binding update to the CN first, but, the sent Care-of Test Init (CoTI) packet for initiating the return routability procedure cannot traverse the firewall because a new source address is used, thus, the binding update cannot be completed and the CN cannot learn the new care-of address of the MN, further, the communication between the CN and the MN is interrupted.

Therefore, at present, a method for MIPv6 packet dynamically traversing a firewall by using the existing Next Steps in Signaling (NSIS) Signaling Layer Protocol (NSLP) technology has been proposed.

The NSLP is an extended protocol of the NSIS and allows a host to configure a Network Address Translation (NAT) and a firewall on a data path according to data flow so as to enable subsequent data flow to traverse corresponding devices and not be interdicted. For example, a source host sends an NSLP signal packet to a destination host of data flow. The NSLP signal packet will be sent through the path of the data flow. Each NAT device and firewall on the path will intercept the NSLP signal packet, perform processing according to the information contained in the NSLP signal packet, and configure their respective states according to the NSLP signal packet so as to enable subsequent data flow to traverse the configured NAT device and firewall.

In this method, it is required that the MN and the CN definitely know the location of the firewall and know which of the MN and the CN is in the network protected by the firewall. Or else, this method cannot be implemented. The requirement is possible to be met in some specific scenarios. However, it is very difficult to locate a firewall exactly when the MN moves all over the network. Therefore, there is a certain limitation to the application environments of the method.

In addition, MIPv6 control packets have different structures in the method and different filtering rules need to be established when different types of MIPv6 control packets traverse the firewall. In other words, an NSIS negotiation needs to be performed to establish a corresponding filtering rule before each MIPv6 control packet is sent. Thus, when a great number of MIPv6 control packets come forth or the MN moves frequently, the corresponding processing process is very fussy and an additional burden is brought to the network.

At present, SUN Corporation also provides a method for MIPv4 packet traversing a firewall. The method mainly uses the characteristics of the Simple Key Management for Internet Protocol (SKIP), data packet oriented encryption and a Name Space Identifier (NSID).

The SKIP is designed on the basis of the protocol of a data packet like the IP. A user issues information of public keys in the form of an SKIP certificate. Public keys are issued to other users and other users acquire and use the public keys to calculate a unique share key for the encrypted communication.

The NSID identifies the type of a key being used.

The Master Key Identifier (MKID) uniquely designates an ID necessary for searching for a right certificate.

A certificate may be determined uniquely by using the NSID and the MKID together. For example, the MN may set the NSID as 1 and set the MKID as the home address, which means that the MN tends to tell the CN to ignore the source IP address and search for the public key by using the home address.

The solution of SUN Corporation is mainly for the application gateway type of firewall and requires that the firewall has the function of decrypting and forwarding a data packet. The scenario in which the CN is in a network protected by a dynamic packet filtering type of firewall is also taken into consideration. The MN and the home agent are outside the network protected by the firewall. In this case, the data packet sent from the MN adopts the tunnel mode of the SKIP.

After receiving an encrypted data packet, the firewall searches out, according to the values of the NSID and the MKID in the data packet, a right certificate in a certificate database, and acquires the share key and decrypts the data packet. Then, the firewall forwards the decrypted data packet to the CN. The CN performs normal processing and sends a response data packet after receiving the data packet. The response data packet is encrypted and then forwarded to the MN by the firewall after reaching the firewall. In the communication process, the firewall does not use the care-of address of the MN when processing the data packet. Thus, the communication will not be influenced and the data packet reaching the CN may still traverse the firewall even if the MN moves.

The method is based on the application proxy type of firewall and requires that the firewall has the function of forwarding a data packet and is capable of performing the encryption and decryption of the SKIP. However, in practical applications, the Application Proxy type of firewall exerts no substantial influence on MIPv6 since MIPv6 is a protocol on the network layer, but what influences the implementation of MIPv6 is the packet filtering type of firewall. Therefore, the method is not applicable to the packet filtering type of firewall.

Moreover, the method also requires that the MN and the CN know the location of the firewall and know which of the MN and CN is in the network protected by the firewall. It is obvious that the requirement cannot be fulfilled in some specific scenarios.

In addition, the method is designed for MIPv4, and the SKIP, the core technology of the method, does not support IPv6 yet at present. Thus, this method cannot be applied to MIPv6.

The application environment in which an MIPv6 packet traverses a firewall is described as follows.

According to different locations of firewalls configured in the network and different types of the nodes (including the CN or the MN) in a network protected by a firewall, there are two application environments in which a firewall influences the MIPv6, which includes an application environment in which the CN is in a network protected by a firewall and an application environment in which the MN moves in the network protected by the firewall.

### (1) The application environment in which the CN is in a network protected by a firewall

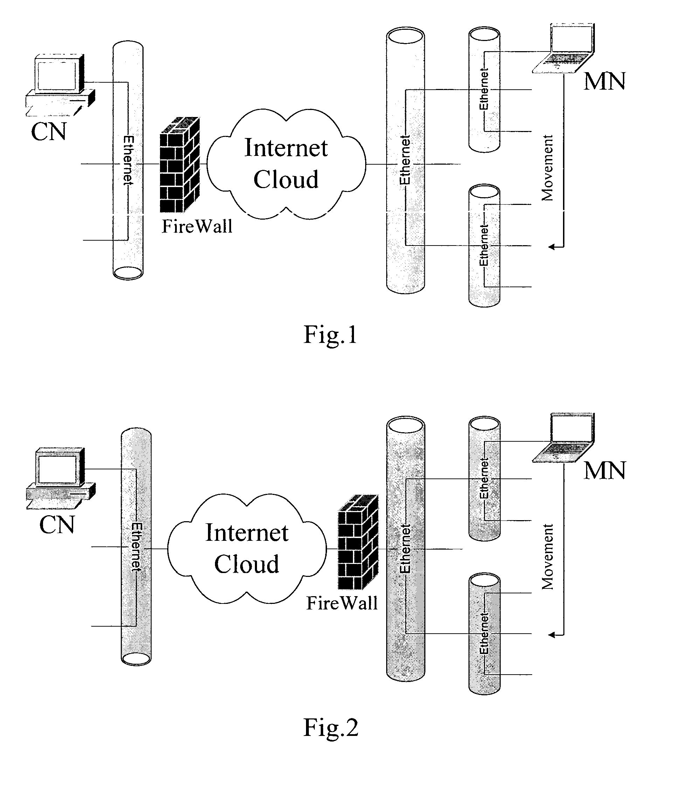

As shown in Fig.1, the firewall located at the side of the CN. In other words, the firewall is located between the CN and the Internet Cloud. In this application environment, after the MN acquires a new care-of address, the CoTI sent by the MN cannot traverse the firewall because the new source address and the new port number in the transport layer are used. Meanwhile, the data packet from the MN to the CN also cannot traverse the firewall because the new source address is used.

### (2) The application environment in which the MN moves in the network protected by the firewall

As shown in Fig.2, the firewall is located at the side of the MN. In other words, the firewall is located between the MN and the Internet. In this application environment, after the MN acquires a new care-of address, the data packet sent by the CN to the MN cannot traverse the firewall because the new destination address is used.

In the above two application environments, the MN acquires a new care-of address after moving, and both the CN and the MN keep on communicating by using the new care-of address. However, the filtering rule of the firewall is established according to the former care-of address. Therefore, a data packet using the new care-of address will be regarded as a new communication and thus dropped. As a result, the communication process is interrupted.

### Summary of the Invention

The present invention provides a method for an MIPv6 packet traversing a firewall, With this method, an MIPv6 node is still able to communicate with a CN normally when the address of the MIPv6 node changes so that the communication will not be interrupted due to the influence of the firewall.

The present invention also provides a firewall for implementing the traversal of an MIPv6 packet.

A method for a Mobile Internet Protocol version 6 (MIPv6) packet traversing a firewall includes:
A. acquiring, by a firewall, filtering information containing the home address of a Mobile Node (MN) from an MIPv6 packet initiating communication;
B. establishing a filtering rule according to the filtering information; and
C. filtering a sequent MIPv6 packet according to the filtering rule.

Step A further includes:
determining whether a received packet is an MIPv6 packet according to the packet format; and
determining whether the received packet is the MIPv6 packet initiating communication according to the type of the received packet if the received packet is the MIPv6 packet.

The home address of the MN is contained in a home address destination option or a Type 2 routing header of an IPv6 extension header of the MIPv6 packet initiating communication; and
in Step A, the firewall acquires the filtering information containing the home address of the MN according to the IPv6 extension header.

Step A includes:
the firewall acquiring the home address destination option upon the receipt of the MIPv6 packet initiating communication sent by the MN;
the firewall acquiring the Type 2 routing header upon the receipt of the MIPv6 packet initiating communication sent by a Correspondent Node (CN).

If the MIPv6 packet is sent by the CN or a home agent, the filtering information comprises: a care-of address as a destination address, the address of the CN as a source address, a source Transmission Control Protocol (TCP) port number and a destination TCP port number; and
if the MIPv6 packet is sent by the MN, the filtering information comprises: the address of the CN as the destination address, a care-of address as the source address, the source TCP port number and the destination TCP port number.

Step A includes:
acquiring the filtering information containing the address of the CN as the source address, the care-of address as the destination address, the source TCP port number and the destination TCP port number if the MIPv6 packet is sent by the CN or the home agent; and
replacing the destination address in the filtering information with the home address in the IPv6 extension header.

Step A includes:
acquiring the filtering information containing the care-of address as the source address, the address of the CN as the destination address, the source TCP port number and the destination TCP port number if the MIPv6 packet is sent by the MN; and
replacing the source address in the filtering information with the home address in the IPv6 extension header.

Step C includes:
C1. acquiring the IPv6 extension header and filtering information in the sequent MIPv6 packet upon the receipt of the sequent MIPv6 packet sent by the MN or the CN;
C2. matching the filtering information with the filtering rule in a filtering rule table; and
allowing the sequent MIPv6 packet to pass the firewall if the matching is successful; forbidding the sequent MIPv6 packet to pass the firewall if the matching is unsuccessful.

A firewall based on the above method includes: an MIPv6 packet receiving unit, a home address and filtering information acquiring unit, a filtering rule establishing and storing unit, a packet filtering unit and an MIPv6 packet forwarding unit, wherein
the MIPv6 packet receiving unit is capable of receiving an MIPv6 packet sent by an Mobile Node (MN) or a Correspondent Node (CN) and sending the MIPv6 packet to the home address and filtering information acquiring unit;
the home address and filtering information acquiring unit is capable of resolving the received MIPv6 packet to acquire filtering information containing the home address of the MN and sending the MIPv6 packet and the filtering information to the packet filtering unit; the home address and filtering information acquiring unit is further capable of sending the acquired filtering information to the filtering rule establishing and storing unit if the received MIPv6 packet is a packet initiating communication;
the filtering rule establishing and storing unit is capable of establishing and storing a filtering rule based on the received filtering information;
the packet filtering unit is capable of receiving the MIPv6 packet and the filtering information, searching for a matching item based on the filtering information in the filtering rule stored in the filtering rule establishing and storing unit, sending the MIPv6 packet to the MIPv6 packet forwarding unit if a matching item is searched out, and discarding the MIPv6 packet if a matching item is not searched out;
the MIPv6 packet forwarding unit is capable of sending the received MIPv6 packet to the CN or the MN.

The MIPv6 packet receiving unit further comprises a packet detecting module for verifying whether a received packet is an MIPv6 packet and the MIPv6 packet receiving unit is further capable of sending the MIPv6 packet to the home address and filtering information acquiring unit.

A filtering rule table for storing a filtering rule is established in the filtering rule establishing and storing unit.

As can be seen from the above technical solutions provided by the present invention, in the method for an MIPv6 packet traversing a firewall and the firewall of the present invention, the firewall acquires the filtering information containing the home address of the MN to establish the filtering rule, and thus a data packet is filtered by the firewall according to the home address rather than a care-of address which changes when the MN moves. Therefore, normal data packet filtering may be performed no matter whether the MN moves and a secure data packet may not be discarded. Thus, the communication in the MIPv6 may be supported well and it may be ensured that an MIPv6 packet reliably traverse a firewall in various cases.

Moreover, when the MN and the CN do not know whether there is a firewall between them and do not know the location of the firewall, the normal communication between the MN and the CN may not be interrupted when the address of the MN changes. In other words, the communication between the MN and the CN is not influenced by the change of the address and the firewall is transparent to the MN and the CN.

It is unnecessary to transport a great number of packets to implement the present invention. Therefore, the burden of the network will not increase.

### Brief Description of the Drawings

Figure I shows a first application environment in which an MIPv6 packet traverses a firewall.
Figure 2 shows a second application environment in which an MIPv6 packet traverses a firewall.
Figure 3 shows a flow chart illustrating the processing of a firewall in the method according to an embodiment of the present invention.
Figure 4 shows a schematic diagram illustrating the structure of a firewall in accordance with an embodiment of the present invention.

### Detailed Description of the Invention

The method for an MIPv6 packet traversing a firewall of the present invention includes: the home address of an MN is added into the MIPv6 packet; the firewall acquires filtering information containing the home address when receiving an MIPv6 data packet initiating communication, replaces the care-of address with the home address in the filtering information to establish a filtering rule, and filters MIPv6 data packets passing the firewall using the filtering rule. Thus, the care-of address is not used to identify communication any longer and does not appear in the filtering information, and the connected communication will not be interrupted as a new connection by the firewall due to the change of the care-of address.

The method for an MIPv6 packet traversing a firewall of the present invention is hereinafter described in detail with reference to an embodiment.

In this embodiment, the home address of an MN is added into the MIPv6 packet first. Specifically, in MIPv6, when an MN communicates with a CN, a packet sent by the MN contains a home address destination option for carrying the home address of the MN. The format of the packet may be as shown in Table 1.

**Table 1**

| IPv6 header | Destination option extension header | Other protocols |
|---|---|---|
| Source address = care-of address Destination address = CN | Home address destination option (Home address) | Mobile header, TCP or User Datagram Protocol (UDP) |

Correspondingly, in MIPv6, a packet sent by the CN contains a Type 2 routing header for carrying the home address of the MN. The corresponding format of the packet may specifically be shown in Table 2.

**Table 2**

| IPv6 header | Type 2 routing header | Other protocols |
|---|---|---|
| Source address = CN Destination address = care-of address | Home address | Mobile header, TCP or UDP |

Similarly, in MIPv6, when the MN communicates with the home agent, the use of the home address destination option and the Type 2 routing header is similar to that shown in Tables 1 and 2 and will not be described herein.

The IPv6 header, and the home address destination option or the Type 2 routing header in Tables 1 and 2 compose the IPv6 extension header.

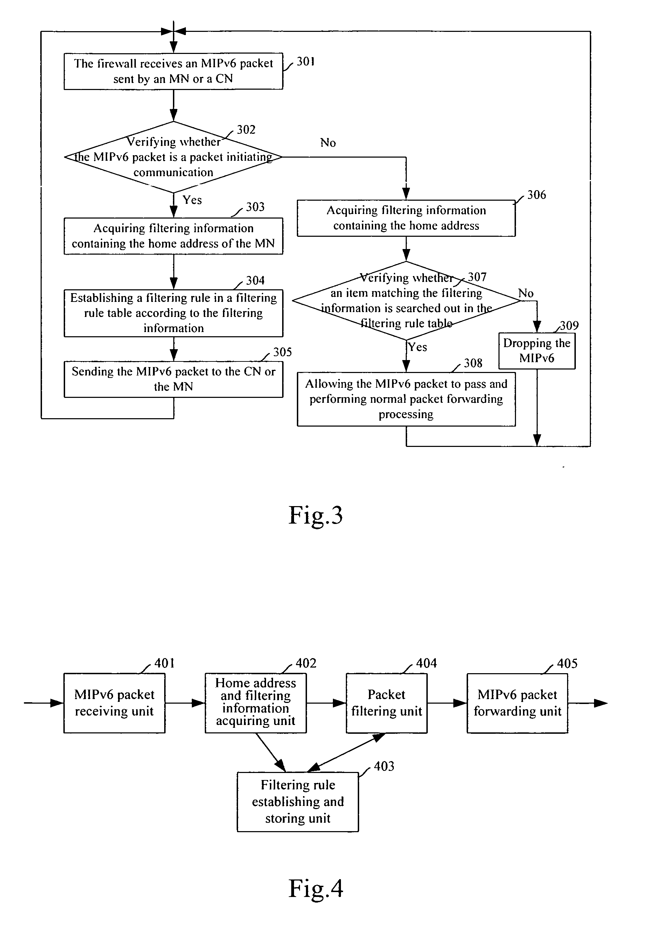

According to the above special format of an MIPv6 packet, the detailed procedure of an embodiment of the present invention is shown in Figure 3. Figure 3 shows a flow chart illustrating the processing of the firewall in the method according to a preferred embodiment of the present invention. The processing specifically includes the processes as follows.

Block 301: The firewall receives an MIPv6 packet sent by an MN or a CN.

Block 302: Verify whether the MIPv6 packet is a data packet initiating communication; if yes, Block 303 is performed; otherwise, Block 306 is performed.

In this block, the firewall may search for a communication connection according to the type of data packet by a conventional method and determine whether the received data packet is the data packet initiating communication according to whether the communication connection is searched out. For example, the firewall searches for a TCP SYN packet which is sent to establish a TCP connection and determines that the received data packet is a data packet initiating communication if the TCP SYN packet is searched out.

Block 303: Resolve the data packet to acquire the IPv6 extension header containing the home address of the MN, and acquire the filtering information containing the home address of the MN according to the IPv6 extension header.

In this embodiment, the firewall is reconfigured to be able to recognize the IPv6 extension header in a MIPv6 packet, i.e., the home address destination option and the Type 2 routing header, so that the firewall will not influence the normal communication of MIPv6. In other words, the firewall accesses the IPv6 extension header including the Type 2 routing header and the home address destination option in each of the MIPv6 packets when filtering data packets.

The detailed recognition method may include: first, resolving the MIPv6 packet to acquire the Type 2 routing header or the home address destination option in the MIP6 packet and further acquiring the home address; then, storing the home address and the information including the source address, the destination address, the source TCP port number and the destination TCP port number of the MIPv6 packet together. Thus, the format of the IPv6 extension header is stored in the firewall, and after a data packet is received, an MIPv6 packet is recognized through verifying whether the format of the data packet matches the stored format.

Block 304: Establish a filtering rule according to the filtering information and storing the filtering rule in a filtering rule table.

In general, when the MN initiates a communication, the filtering information acquired by the firewall includes: <the address of the CN, the care-of address, the source TCP port number and the destination TCP port number>. The care-of address is the source address. When the CN or a home agent initiates communication, the filtering information acquired by the firewall includes: <the care-of address, the address of the CN, the source TCP port number and the TCP destination port number>. The care-of address is the destination address.

In this embodiment, when the MN initiates a communication, the firewall replaces the source address in the filtering information with the home address in the IPv6 extension header if the firewall searches out the home address destination option. After such processing, the filtering information may specifically include: <the address of the CN, the home address, the source TCP port number and the destination TCP port number>. The filtering rule established by the firewall according to the filtering information is <the address of the CN, the home address, the source TCP port number and the destination TCP port number> and <the home address, the address of the CN, the source TCP port number and the destination TCP port number>.

When the CN or the home agent initiates a communication, the firewall replaces the destination address in the filtering information with the home address in the IPv6 extension header if the firewall searches out the type 2 routing header. After such processing, the filtering information may specifically include: <the home address, the address of the CN, the source TCP port number and the destination TCP port number>. The filtering rule established by the firewall according to the filtering information is the same as the above-mentioned one.

Block 305: Send the packet initiating communication to the CN or the MN, and return to Block 301 to continue to receive the subsequent packets.

Specifically, the firewall forwards the packet to the CN if the firewall received the packet initiating communication from the MN, and the firewall forwards the packet to the MN if the firewall received the packet initiating communication from the CN.

Block 306: Resolve the packet to acquire the IPv6 extension header containing the home address of the MN, and acquire the filtering information containing the home address of the MN according to the IPv6 extension header.

Block 307: Search for an item matching the filtering information in the filtering rule table, and verify whether an item is searched out, and if yes, the packet is a secure packet and perform Block 308; otherwise, the packet is an insecure packet and perform Block 309.

Block 308: Allow the packet to pass, perform normal packet forwarding processing, and return to Block 301 to continue to receive the subsequent packets.

Specifically, the firewall forwards the packet to the CN if the firewall received the packet from the MN, and the firewall forwards the packet to the MN if the firewall received the packet from the CN.

Block 309: Forbid the packet to pass the firewall, drop the packet, and return to Block 301 to continue to receive subsequent packets.

The implementation of this embodiment is hereinafter described by taking the application environment shown in Figure 1 as an example. When the CN initiates a communication to the MN and the corresponding format of a packet is as shown in Table 2, the process of this embodiment is described as follows.
(1) In general, the filtering information acquired by the firewall by resolving a data packet includes: the care-of address, the address of the CN, the source TCP port number and the destination TCP port number.
(2) When the firewall accesses the Type 2 routing header, the firewall replaces the destination address (i.e., the care-of address) in the filtering information with the home address and thus acquires the updated filtering information including the address of the CN, the home address, the source TCP port number and the destination TCP port number.
(3) The firewall establishes a corresponding filtering rule according to the updated filtering information and adds the filtering rule into the filtering rule table. Specifically, the filtering rule includes:
   1. The address of the CN, the home address, the source TCP port number and the destination TCP port number;
   2. The home address, the address of the CN, the source TCP port number and the destination TCP port number.
(4) When the MN responds to the communication of the CN, the format of the packet sent by the MN is as shown in Table 1. In this case, the filtering information acquired by the firewall by resolving the packet includes the address of the CN, the care-of address, the source TCP port number and the destination TCP port number.
(5) When the firewall accesses the destination option extension header, the firewall replaces the source address in the filtering information with the contents of the home address destination option (i.e., the home address). In this case, the acquired filtering information includes the home address, the address of the CN, the source TCP port number and the destination TCP port number.
(6) The firewall searches the filtering rule table according to the filtering information, if a matching rule is searched out, the firewall allows the packet to pass; otherwise, the firewall obstructs the packet.

The corresponding filtering rule has been added into the filtering rule table of the firewall in process (3). Thus, the corresponding packet may pass the corresponding firewall successfully in this process.

The process for the application environment shown in Figure 2 is similar to the above-mentioned process, and may be implemented by those skilled in the art by referring to the above process, and thus will not be described herein.

Therefore, in the present invention, an MIPv6 packet still may pass the firewall successfully when the address of the MIPv6 packet changes, which guarantees the reliable communication of MIPv6.

The present invention also provides a firewall for implementing the traversal of a MIPv6 packet. Figure 4 shows a schematic diagram illustrating the structure of a firewall in accordance with an embodiment of the present invention, the firewall includes: an MIPv6 packet receiving unit 401, a home address and filtering information acquiring unit 402, a filtering rule establishing and storing unit 403, a packet filtering unit 404 and an MIPv6 packet forwarding unit 405.

The MIPv6 packet receiving unit 401 is capable of receiving a MIPv6 packet sent by an MN or a CN and sending the MIPv6 packet to the home address and filtering information acquiring unit 402. In this embodiment, a packet detecting module may be set in the MIPv6 packet receiving unit 401. The packet detecting module stores the format of the IPv6 extension header, and after receiving a data packet, recognizes whether the data packet is an MIPv6 packet by verifying whether the format of the data packet matches the format of the IPv6 extension header. The MIPv6 packet receiving unit 401 is also capable of sending an MIPv6 packet to the home address and filtering information acquiring unit 402.

The home address and filtering information acquiring unit 402 is capable of resolving a received MIPv6 packet to acquire the IPv6 extension header containing the home address, acquiring the filtering information containing the home address of the MN according to the IPv6 extension header, and sending the MIPv6 packet and the filtering information to the packet filtering unit 404. The home address and filtering information acquiring unit 402 is further capable of sending the acquired filtering information to the filtering rule establishing and storing unit 403 if the received MIPv6 packet is a packet initiating communication.

The home address and filtering information acquiring unit 402 may first acquire the general filtering information containing the care-of address, and then replace the care-of address in the filtering information with the home address in the IPv6 extension header according to the IPv6 extension header.

In this embodiment, a packet initiating communication is sent by the MIPv6 packet forwarding unit 405 to the CN or the MN after the packet passes the packet filtering unit 404. In practical applications, a packet initiating communication may be directly sent by the MIPv6 packet forwarding unit 405 to the CN or the MN after the filtering rule is established.

The home address and filtering information acquiring unit 402 may search for communication connection according to the type of packet by a conventional method and determine whether the received packet is the packet initiating communication by judging whether the communication connection is searched out. For example, the home address and filtering information acquiring unit 402 searches for a TCP SYN packet which is sent to establish a TCP connection, and determines that the received data packet is a packet initiating communication if the TCP SYN packet is searched out.

The filtering rule establishing and storing unit 403 is capable of receiving filtering information sent by the home address and filtering information acquiring unit 402, establishing a filtering rule according to the filtering information, and storing the filtering rule in a filtering rule table.

The packet filtering unit 404 is capable of receiving a packet and filtering information, searching the filtering rule table in the filtering rule establishing and storing unit 403 for a matching item according to the filtering information, verifying whether a matching item is searched out; if yes, the packet is a secure packet and sending the packet to the MIPv6 packet forwarding unit 405; otherwise, the packet is an insecure packet, and the packet is forbidden to traverse the firewall and dropping the packet.

The MIPv6 packet forwarding unit 405 is capable of performing the normal packet forwarding processing. In other words, the MIPv6 packet forwarding unit 405 sends a packet to the CN or the MN.

As can be seen from the above embodiments, the method for a MIPv6 packet traversing a firewall and the firewall for implementing the method of the present invention may support the MIPv6 well. It is unnecessary for the MN and the CN to know whether there is a firewall between them and the location of the firewall, the communication between the MN and the CN is not influenced by the change of the address, and the firewall is transparent to the MN and the CN. Therefore, it may be guaranteed that a MIPv6 packet still may traverse the firewall successfully when the address changes, so as to guarantee the reliable communication of MIPv6.

The above are only preferred embodiments of the present invention. The protection scope of the present invention, however, is not limited to the above description. Any change or substitution, within the technical scope disclosed by the present invention, easily occurring to those skilled in the art should be covered by the protection scope of the present invention. Therefore, the protection scope of the present invention should be determined according to the claims.

## Claims

1. A method for a Mobile Internet Protocol version 6 (MIPv6) packet traversing a firewall, the method comprising:
A. acquiring, by a firewall, filtering information containing the home address of a Mobile Node (MN) from an MIPv6 packet initiating communication;
B. establishing a filtering rule according to the filtering information; and
C. filtering a sequent MIPv6 packet according to the filtering rule.

2. The method of Claim 1, Step A further comprising:
determining whether a received packet is an MIPv6 packet according to the packet format; and
determining whether the received packet is the MIPv6 packet initiating communication according to the type of the received packet if the received packet is the MIPv6 packet.

3. The method of Claim 1, wherein the home address of the MN is contained in a home address destination option or a Type 2 routing header of an IPv6 extension header of the MIPv6 packet initiating communication; and
in Step A, the firewall acquires the filtering information containing the home address of the MN according to the IPv6 extension header.

4. The method of Claim 3, wherein Step A comprises:
the firewall acquiring the home address destination option upon the receipt of the MIPv6 packet initiating communication sent by the MN;
the firewall acquiring the Type 2 routing header upon the receipt of the MIPv6 packet initiating communication sent by a Correspondent Node (CN).

5. The method of Claim 3, wherein if the MIPv6 packet is sent by the CN or a home agent, the filtering information comprises: a care-of address as a destination address, the address of the CN as a source address, a source Transmission Control Protocol (TCP) port number and a destination TCP port number; and
if the MIPv6 packet is sent by the MN, the filtering information comprises: the address of the CN as the destination address, a care-of address as the source address, the source TCP port number and the destination TCP port number.

6. The method of Claim 5, wherein Step A comprises:
acquiring the filtering information containing the address of the CN as the source address, the care-of address as the destination address, the source TCP port number and the destination TCP port number if the MIPv6 packet is sent by the CN or the home agent; and
replacing the destination address in the filtering information with the home address in the IPv6 extension header.

7. The method of Claim 5, wherein Step A comprises:
acquiring the filtering information containing the care-of address as the source address, the address of the CN as the destination address, the source TCP port number and the destination TCP port number if the MIPv6 packet is sent by the MN; and
replacing the source address in the filtering information with the home address in the IPv6 extension header.

8. The method of Claim 3, wherein Step C comprises:
C1. acquiring the IPv6 extension header and filtering information in the sequent MIPv6 packet upon the receipt of the sequent MIPv6 packet sent by the MN or the CN;
C2. matching the filtering information with the filtering rule in a filtering rule table; and
allowing the sequent MIPv6 packet to pass the firewall if the matching is successful; forbidding the sequent MIPv6 packet to pass the firewall if the matching is unsuccessful.

9. A firewall based on the above method, comprising: an MIPv6 packet receiving unit, a home address and filtering information acquiring unit, a filtering rule establishing and storing unit, a packet filtering unit and an MIPv6 packet forwarding unit, wherein
the MIPv6 packet receiving unit is capable of receiving an MIPv6 packet sent by an Mobile Node (MN) or a Correspondent Node (CN) and sending the MIPv6 packet to the home address and filtering information acquiring unit;
the home address and filtering information acquiring unit is capable of resolving the received MIPv6 packet to acquire filtering information containing the home address of the MN and sending the MIPv6 packet and the filtering information to the packet filtering unit; the home address and filtering information acquiring unit is further capable of sending the acquired filtering information to the filtering rule establishing and storing unit if the received MIPv6 packet is a packet initiating communication;
the filtering rule establishing and storing unit is capable of establishing and storing a filtering rule based on the received filtering information;
the packet filtering unit is capable of receiving the MIPv6 packet and the filtering information, searching for a matching item based on the filtering information in the filtering rule stored in the filtering rule establishing and storing unit, sending the MIPv6 packet to the MIPv6 packet forwarding unit if a matching item is searched out, and discarding the MIPv6 packet if a matching item is not searched out;
the MIPv6 packet forwarding unit is capable of sending the received MIPv6 packet to the CN or the MN.

10. The firewall of Claim 9, wherein the MIPv6 packet receiving unit further comprises a packet detecting module for verifying whether a received packet is an MIPv6 packet and the MIPv6 packet receiving unit is further capable of sending the MIPv6 packet to the home address and filtering information acquiring unit.

11. The firewall of Claim 9, wherein a filtering rule table for storing a filtering rule is established in the filtering rule establishing and storing unit.
